# EUROPEAN PATENT APPLICATION

(11) **EP 4 502 446 A1**
(43) Date of publication of application: **05.02.2025**
(21) Application number: 24188685.2
(22) Date of filing: 15.07.2024
(51) Int. Cl.: F16L 37/14

(54) **HOSE CONNECTION ADAPTOR**

(30) Priority: 01.08.2023 AU 2023902435
(71) Applicant: Hoselink Pty Ltd, Brookvale, New South Wales 2100 (AU)
(72) Inventor: KIERATH, James, Brookvale 2100 (AU); BORTZ, Gary, Brookvale 2100 (AU)
(74) Representative: Cabinet Nuss

(57) **Abstract**

A hose connector adaptor (100) comprising a body (120) having a proximal end (130) and an opposing distal end (140), a fluid flow passage (150) extending between the proximal and distal ends (130, 140), the body (120) having an engagement formation (160) located at the proximal end. A locking member (200) is movably coupled to the body (120), the locking member (200) having an aperture (220) in fluid communication with the fluid-flow passage (150). The locking member (200) is moveable between an unlocked position and a locked position, in the locked position the locking member (200) locally reduces a cross-sectional area of the fluid flow passage (150) within the body (120).

## Description

### Field of the invention

The present invention relates to a hose connection adaptor for coupling a hose to another hose or terminal device such as a nozzle or sprinkler fitting. In particular, the hose connection adaptor has application in gardening, irrigation, and other related fields. However, it will be appreciated by those skilled in the art that the hose connection adaptor may be applied in other fields of use, and with fluids other than water.

### Background

Any reference herein to known prior art does not, unless the contrary indication appears, constitute an admission that such prior art is commonly known by those skilled in the art to which the invention relates, at the priority date of this application.

Hoses are used for applications such as irrigation of crops and gardens. In residential settings, hoses have applications for watering plants, hosing surfaces, and washing pets, structures, and vehicles. Accordingly, hoses are widely used in residential and commercial settings around the world.

Hoses and hose fittings are manufactured in a variety of different diameters and thicknesses, and are provided with different end fittings for securement to a water source outlet or a fitting such as a nozzle or sprinkler. However, with respect to watering hoses for example, there are different hose connections used in different regions, and the different connectors are generally not compatible. In practice, this means that a hose coupling or fitting of a specific variety or brand is unlikely to be compatible with other types, due to variations in the proprietary coupling mechanisms.

A common type of fitting used in Australia for example, is termed a "click-on fittings". The click-on style of fitting includes a male fitting having a spigot with a circumferential polymer O-ring seal. The spigot and O-ring seal are configured to connect with a corresponding female fitting to provide a water-tight seal. A clip which is axially slidable is provided to secure the male and female components together.

The incompatibility between different brands of hose fittings is problematic, and it makes it difficult for consumers and businesses to use different hoses or fittings that are not compatible with their existing products. Furthermore, existing adaptation methods are prone to leaking and bursting off, making the connection unreliable.

### Object of the Invention

It is an object of the invention to overcome or at least ameliorate one or more of the above disadvantages, or at least to provide a useful alternative.

### Summary of the invention

The present invention provides a hose connection adaptor comprising:
a body having a proximal end and an opposing distal end, a fluid flow passage extending between the proximal and distal ends, the body having an engagement formation located at the proximal end;
a locking member movably coupled to the body, the locking member having an aperture in fluid communication with the fluid-flow passage;
wherein the locking member is moveable between an unlocked position and a locked position, in the locked position the locking member locally reduces a cross-sectional area of the fluid flow passage within the body.

The cross-sectional area of the fluid flow passage at or near the proximal end is preferably smaller than the cross-sectional area of the fluid flow passage at the distal end.

The locking member preferably includes a shoulder which projects radially inwardly into the aperture.

The aperture preferably has an outer profile generally in the shape of an ellipse, oval or obround, and the shoulder is defined by a projection extending away from the outer profile and located at one end of the aperture.

The distal end of the body is preferably defined by a generally tubular barrel having first and second diametrically opposed openings, the openings being configured to receive first and second longitudinally opposing ends of the locking member.

Preferably in the unlocked position the first end of the locking member extends from the first opening beyond a radial outermost wall of the tubular barrel, and in the locked position the second end of the locking member extends from the second opening beyond a radial outermost wall of the tubular barrel.

The body preferably includes a radially extending flange located on a proximal side of the first and second diametrically opposed openings of the tubular barrel.

The flange preferably includes a radially extending finger configured to be received in a radially extending slot formed on a surface of the locking member.

The finger and the slot are preferably both tapering and configured to engage to limit a range of movement of the locking member.

The finger and the slot preferably engage as the locking member moves toward or beyond the unlocked position.

The engagement formation is preferably defined by a male threaded portion.

The fluid flow passage at or near the proximal end of the body is preferably configured to receive a ring seal located on a spigot of a click on hose fitting.

In a second aspect, the present invention provides a method of coupling a click on hose fitting to a hose connection adaptor, the adaptor including a body having a proximal end and an opposing distal end, a fluid flow passage extending between the proximal and distal ends, the method including the steps of:
inserting a spigot of a click on hose fitting into the distal end of the fluid flow passage;
operating a locking member which is movably coupled to the body portion, the locking member having an aperture in fluid communication with the fluid-flow passage;
moving the locking member between an unlocked position and a locked position, in the locked position, the locking member locally reduces a cross-sectional area of the fluid flow passage within the body and engages with a step formed on the spigot.

### Brief description of the drawings

The invention will now be described, by way of non-limiting example, with reference to the accompanying drawings, in which:
Figure 1 is a perspective view depicting a hose connection adaptor according to the present invention and a portion of a click-on fitting;
Figure 2 is an exploded perspective view of the hose connection adaptor of Figure 1;
Figure 3 is perspective view of the hose connection adaptor of Figure 1;
Figure 4 is a cross-sectional side view of the hose connection adaptor of Figure 1, including a portion of a click-on fitting;
Figure 5 is a first side view of the hose connection adaptor of Figure 1;
Figure 6 is a second side view of the hose connection adaptor of Figure 1;
Figure 7 is a cross-sectional side view of the hose connection adaptor of Figure 1, with the click-on fitting omitted;
Figure 8 is a top view of the hose connection adaptor of Figure 1; and
Figure 9 is a side view depicting the hose connection adaptor secured to a coupling.

### Detailed description

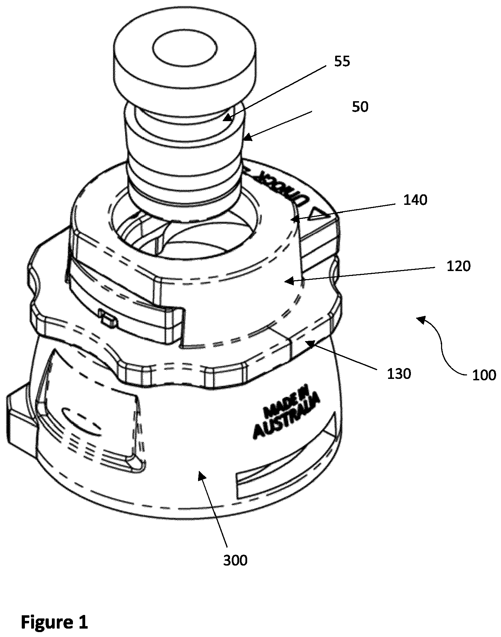

Referring to figures 1 to 9 of the accompanying drawings, a hose connection adaptor 100 is disclosed. The hose connection adaptor 100 is used to connect a shaft or spigot 51 of a conventional click-on hose fitting 50 to a non-compatible hose fitting, enabling the securement of different, non-compliant hose fittings. The hose connection adaptor 100 is described in the context of a watering hose. However, it can alternatively be used with other fluids, such as pneumatic fittings in respect of air or other gasses. Alternatively it may be used in hydraulic applications with oils and other liquids.

The hose connection adaptor 100 includes a body 120 having a proximal end 130 and an opposing distal end 140.

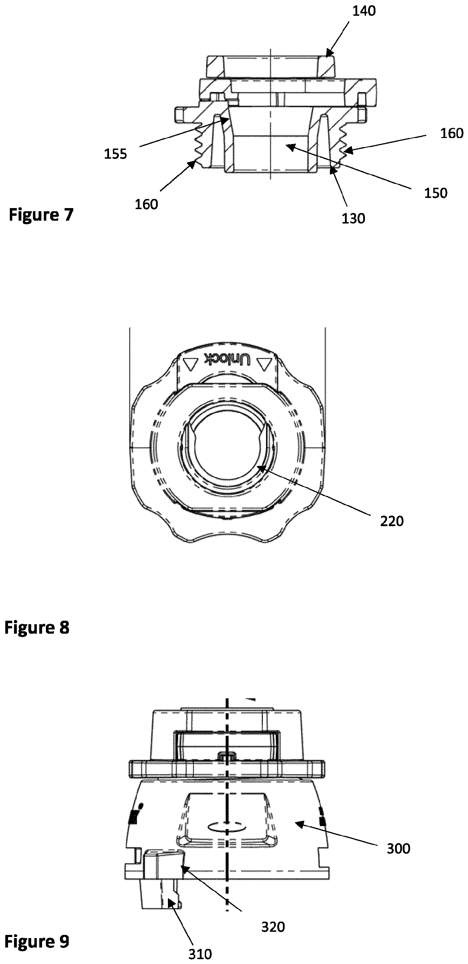

As shown in Figure 7, a fluid flow passage 150 extends through the body 120 between the proximal and distal ends 130, 140. The fluid flow passage 150 enables water to pass through the hose connection adaptor 100 when in use.

The body 120 includes an engagement formation 160 located at the proximal end 130. The engagement formation 160 enables the hose connection adaptor 100 to be selectively engaged with other hose fittings, such as a hose coupling 300, which is depicted in figures 1 and 9.

In the embodiment depicted, the engagement formation 160 is defined by a male threaded portion, configured to be received by a corresponding female threaded socket. However, it will be appreciated that other engagement formations may be envisaged, such as a female threaded portion or another engagement mechanism. Alternatively, the hose connection adaptor 100 may be fabricated so that it is integrally formed with the hose coupling 300, and in such an arrangement, the engagement formation 160 is defined by the locking projection 310 and locking recess 320 of the of the hose coupling 300, as seen in Figure 9.

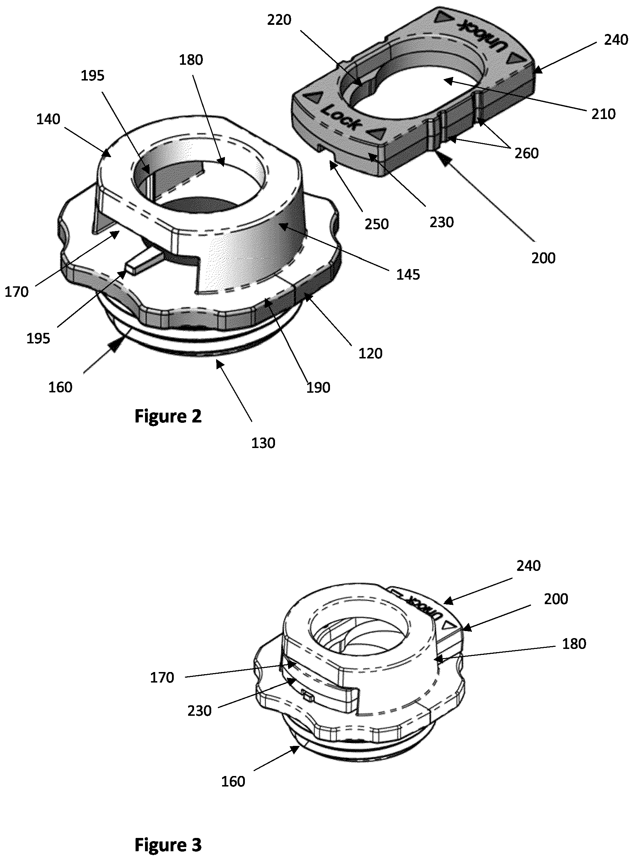

Referring to Figure 2, the hose connection adaptor 100 includes a locking member 200 which is movably coupled to the body 120. The locking member 200 has a central aperture 210 which is in fluid communication with the fluid-flow passage 150 within the body 120, when the locking member 200 is secured to the body 120.

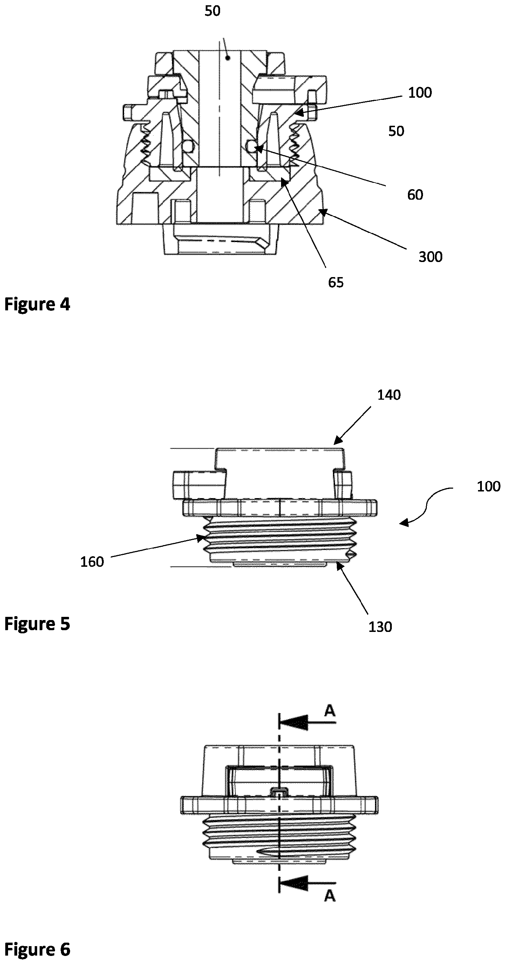

The locking member 200 is moveable between an unlocked position and a locked position. The locked position is depicted in Figures 3 and 4. In the locked position, the locking member 200 locally reduces a cross-sectional area of the fluid flow passage 150 within the body 120, as will be described.
Referring to Figure 7, the cross-sectional area of the fluid flow passage 150 at or near the proximal end 130 of the body 120 is smaller than the cross-sectional area of the fluid flow passage 150 at the distal end 140. In particular, the fluid flow passage 150 includes a tapering region 155 In which the profile is in the form if a truncated cone, and the cross-sectional area decreases toward the proximal end of the body 120. In use, the tapering region 155 provides a guide surface to guide the spigot 51 of a click-on hose fitting 50 within the fluid flow passage 150. The fluid flow passage 150 at or near the proximal end of the body 120 is configured to receive and engage a ring seal 60 located on a spigot 51 of a click on hose fitting 50, shown in Figure 4.

A polymer ring seal 65 is seated within the hose coupling 300. When the thread of the engagement formation 160 is screwed into the corresponding female thread of the hose coupling 300, part of the proximal end of the body 120 comes into abutment with the seal 65, creating a hermetic seal between the hose connection adaptor 100 and the hose coupling 300.

As shown in Figure 2, the locking member 200 includes a shoulder 220 which projects radially inwardly into the aperture 210. As shown in Figure 8, when seen in end view, the shoulder 220 has a generally semi-circular shape.

With reference to figure 2, in the embodiment depicted, the aperture 210 has an outer profile generally in the shape of an ellipse, oval or obround, and the shoulder 220 is defined by a semi-circular projection extending away from the outer profile and located at one end of the aperture 210. In particular, the shoulder 220 as depicted in Figure 2 is formed having a thickness, when viewed in a longitudinal direction between the proximal and distal ends 130, 140, such that the shoulder 220 thickness is only a portion of the thickness of the locking member 200.

It will be appreciated that the aperture 210 may be provided in other shapes, and could be rectangular.

As seen in Figure 2 or 3, the distal end 140 of the body 120 is defined by a generally tubular barrel 145 having first and second diametrically opposed openings 170, 180. The openings 170, 180 are laterally located. The openings 170,180 are configured to each receive one of the first and second longitudinally opposing ends 230, 240 of the locking member 200, and the locking member 200 is moveable parallel to a longitudinal axis of the locking member, so that the position of the ends 230, 240 of the locking member 200 are variable relative to the openings 170, 180, to define distinct unlocked and locked positions of the hose connection adaptor 100.

In the unlocked position, the first longitudinally opposing end 230 of the locking member 200 extends from and beyond the first opening 170 beyond a radial outermost wall of the tubular barre 145, and in the locked position the second longitudinally opposing end 240 of the locking member 200 extends from the second opening 180, beyond a radial outermost wall of the tubular barrel 145.

As seen in Figure 2, the locking member 200 has two channels 260 formed on each side thereof. The channels 260 extend perpendicular to a direction of movement of the locking member 200. The channels 260 are sized to mate with a corresponding rib 195 of the body. The interaction between the channels 260 and the corresponding rib 195 defines both the locked and unlocked positions of the locking member 200, and this interaction prevents or at least reduces the likelihood of the locking member 200 unintentionally moving away from an intended position.

Due to the resilience of the looking member 200, partially as a result of the thin web of material in the vicinity of the channels 260, the locking member 200 is elastically deformable when a sufficient force is applied by a user, to one of the first and second longitudinally opposing ends 230, 240. Such a force results in the wall of the looking member 200 deforming slightly so that the channel 260 and corresponding rib 195 can separate.

As shown in Figure 2, the body 120 includes a radially extending flange 190 which is located on a proximal side of the first and second diametrically opposed openings 170, 180 of the tubular barrel 145. The flange 190 provides a user grip portion that can be gripped by hand to facilitate rotation of the hose connection adaptor 100 to secure or disengage it from a hose coupling 300. Alternatively, a tool such as a shifting spanner can be used to grip diametrically opposing flat surfaces of the flange 190.

Referring to Figure 2, the flange 190 includes a radially extending finger 195 configured to be received in a radially extending slot 250 formed on a surface of the locking member 200. It will be appreciated that in an alternative embodiment, the slot 250 and radially extending finger 195 may alternatively be located on the other component, in the contrary sense.

The finger 195 and the slot 250 are each tapering and configured to engage each other to limit a range of movement of the locking member 200 relative to the body 120.

As depicted in Figures 2 and 3, the finger 195 and the slot 250 engage as the locking member 200 moves toward or beyond the unlocked position, which prevents the locking member 200 from being unintentionally removed from the hose connection adaptor 100.

The operation of the hose connection adaptor 100 will now be described.

The hose connection adaptor 100 is initially screwed onto the hose coupling 300.

When a user wishes to secure the hose connection adaptor 100 to a click-on hose fitting 50, the spigot 51 of the click-on hose fitting 50 is then inserted into the distal end 140 of the fluid flow passage 150. When the spigot 51 is fully inserted, the locking member 200 is manually pushed from the unlocked position toward the locked position by applying a force to the first end of the locking member 230. During the transition of the locking member 200, the shoulder 220 of the locking member 200 moves into and locally reduces a cross-sectional area of the fluid flow passage within the body and engages with a circumferential step 55 formed on the spigot 51.

The engagement between the spigot 51 and the shoulder 220 longitudinally secures the spigot 51, and prevents it from being unintentionally withdrawn from the fluid flow passage 150.

When the user wishes to reverse the process, to separate the spigot 51 from the hose connection adaptor 100, the user applies a force to the second longitudinally opposing end 240 of the locking member 200. This has the effect of moving the locking member 200 in an opposing direction, and decouples the shoulder 220 from the circumferential step 55 formed on the spigot 51.

Wherever it is used, the word "comprising" is to be understood in its "open" sense, that is, in the sense of "including", and thus not limited to its "closed" sense, that is the sense of "consisting only of". A corresponding meaning is to be attributed to the corresponding words "comprise", "comprised" and "comprises" where they appear.

## Claims

1. A hose connection adaptor (100) comprising:
a body (120) having a proximal end (130) and an opposing distal end (140), a fluid flow passage (150) extending between the proximal and distal ends (130, 140), the body(120) having an engagement formation (160) located at the proximal end (130);
a locking member (200) movably coupled to the body (120), the locking member (200) having an aperture (210) in fluid communication with the fluid-flow passage (150);
wherein the locking member (200) is moveable between an unlocked position and a locked position, in the locked position the locking member (200) locally reduces a cross-sectional area of the fluid flow passage (150) within the body (120).

2. The hose connection adaptor (100) of claim 1, wherein the cross-sectional area of the fluid flow passage (150) at or near the proximal end (130) is smaller than the cross-sectional area of the fluid flow passage (150) at the distal end (140).

3. The hose connection adaptor (100) of either of the preceding claims, wherein the locking member (200) includes a shoulder (220) which projects radially inwardly into the aperture (210).

4. The hose connection adaptor (100) of claim 3, wherein the aperture (210) has an outer profile generally in the shape of an ellipse, oval or obround, and the shoulder is defined by a projection extending away from the outer profile and located at one end of the aperture (210).

5. The hose connection adaptor (100) of any one of the preceding claims, wherein the distal end (140) of the body (120) is defined by a generally tubular barrel (145) having first and second diametrically opposed openings (170, 180), the openings (170, 180) being configured to receive first and second longitudinally opposing ends of the locking member (200).

6. The hose connection adaptor (100) of claim 5, wherein in the unlocked position the first end of the locking member (200) extends from the first opening (170) beyond a radial outermost wall of the tubular barrel (145), and in the locked position the second end of the locking member extends from the second opening (180) beyond a radial outermost wall of the tubular barrel (145).

7. The hose connection adaptor (100) of claim 5 or 6, wherein the body (120) includes a radially extending flange (190) located on a proximal side of the first and second diametrically opposed openings (170, 180) of the tubular barrel (145).

8. The hose connection adaptor (100) of claim 7, wherein the flange (190) includes a radially extending finger (195) configured to be received in a radially extending slot (250) formed on a surface of the locking member (200).

9. The hose connection adaptor of claim 8, wherein the finger (195) and the slot (250) are both tapering and configured to engage to limit a range of movement of the locking member (200).

10. The hose connection adaptor (100) of claim 8 or 9, wherein the finger (195) and the slot (250) engage as the locking member moves toward or beyond the unlocked position.

11. The hose connection adaptor (100) of any one of the preceding claims, wherein the engagement formation (160) is defined by a male threaded portion.

12. The hose connection adaptor (100) of claim 2, wherein the fluid flow passage at or near the proximal end (130) of the body (120) is configured to receive a ring seal (60) located on a spigot (51) of a click on hose fitting (50).

13. A method of coupling a click on hose fitting (50) to a hose connection adaptor (100), the adaptor (100) including a body (120) having a proximal end (130) and an opposing distal end (140), a fluid flow passage (150) extending between the proximal and distal ends(130, 140), the method including the steps of:
inserting a spigot (51) of a click on hose fitting (50) into the distal end of the fluid flow passage (150);
operating a locking member (200) which is movably coupled to the body portion (120), the locking member (200) having an aperture (210) in fluid communication with the fluid-flow passage (150);
moving the locking member (200) between an unlocked position and a locked position, in the locked position, the locking member (200) locally reduces a cross-sectional area of the fluid flow passage (150) within the body (120) and engages with a step (55) formed on the spigot (51).
